# EUROPÄISCHE PATENTANMELDUNG

(11) **EP 2 468 441 A1**
(43) Veröffentlichungstag der Anmeldung: **27.06.2012**
(21) Anmeldenummer: 10196896.4
(22) Anmeldetag: 23.12.2010
(51) Int. Cl.: B23D 31/00, E01B 31/04, E02F 3/96

(54) **Schienentrennvorrichtung zum Trennen von Schienen**

(71) Anmelder: Müller, Matthias, 41540 Dormagen (DE)
(72) Erfinder: Müller, Matthias, 41540 Dormagen (DE)
(74) Vertreter: von Kreisler Selting Werner

(57) **Zusammenfassung**

Bei einer Schienentrennvorrichtung (7) zum Trennen von Schienen (21) eines Gleises, ist vorgesehen, dass dass mindestens ein Schneidmesser (1) vorgesehen ist, das in einer Arbeitsposition derart in Bezug zu einer Schiene (21) des Gleises platzierbar ist, dass die Schiene (21) zumindest teilweise mit dem Schneidmesser (1) durch Verfahren des Schneidmessers (1) schneidbar ist, dass mindestens zwei Halteeinrichtungen (6,8) zum Halten der Schiene (21) vorgesehen sind, wobei die Halteeinrichtungen in der Arbeitsposition derart in Bezug zu dem Schneidmesser (1) angeordnet sind, dass das Schneidmesser (1) in Längsrichtung (E) der Schiene zwischen den mindestens zwei Halteeinrichtungen (6,8) angeordnet ist.

## Beschreibung

Die Erfindung betrifft eine Schienentrennvorrichtung nach dem Oberbegriff des Anspruchs 1, sowie ein Verfahren zum Trennen von Schienen nach Anspruch 9.

Als Schienentrennvorrichtung wird häufig ein Trennschleifer verwendet. Dafür muss eine Person den Trennschleifer an der Schiene eines Gleises ansetzen und diese mit dem Trennschleifer zertrennen. Dieses Verfahren ist sehr arbeitsintensiv und zeitaufwendig.

Ferner existieren Schienentrennvorrichtungen, wie sie in der DE 40 34 378 beschrieben werden. Bei diesen Schienentrennvorrichtungen werden die Schienen aus dem Gleisbett herausgehoben und in den Schienenbrecher hineingelegt. Dort werden sie dann mit Hilfe eines Greifers festgehalten und ein Brecharm wird verschwenkt und bricht die Schienen dabei. Auch dieses Verfahren ist sehr aufwendig, da die Schienen zunächst aus dem Schienenbett herausgenommen werden müssen und einzeln oder in einer Gruppe in die Schienentrennvorrichtung hineingelegt werden müssen.

Der Erfindung liegt daher die Aufgabe zugrunde, eine Schienentrennvorrichtung und ein Verfahren zum Trennen von Schienen zu schaffen, bei der bzw. bei dem die Schienen effektiv und mit geringerem Zeitaufwand getrennt werden können. Zur Lösung dieser Aufgabe dienen die Merkmale des Anspruchs 1 und des Anspruchs 9.

Die Erfindung sieht in vorteilhafter Weise vor, dass mindestens ein Schneidmesser vorgesehen ist, das in einer Arbeitsposition derart in Bezug zu einer Schiene des Gleises plazierbar ist, dass die Schiene zumindest teilweise mit dem Schneidmesser durch Verfahren des Schneidmessers schneidbar ist, und dass mindestens zwei Halteeinrichtungen zum Halten der Schiene beim Schneiden der Schiene mit den Schneidmesser vorgesehen sind, wobei die Halteeinrichtung in der Arbeitsposition derart in Bezug zu dem Schneidmesser angeordnet sind, dass das Schneidmesser in Längsrichtung der Schiene zwischen den mindestens zwei Halteeinrichtungen angeordnet sind.

Ferner sieht die Erfindung gemäß dem Verfahren zum Trennen einer Schiene in vorteilhafter Weise vor, dass eine Schienentrennvorrichtung, die ein Schneidmesser und zwei Halteeinrichtungen aufweist, an einer Schiene eines Gleises derart platziert wird, dass das Schneidmesser in Längsrichtung der Schiene zwischen den beiden Halteeinrichtungen angeordnet ist. In einem zweiten Schritt wird die Schiene durch die mindestens zwei Halteeinrichtungen gehalten und in einem dritten Schritt wird die Schiene zwischen die beiden Halteeinrichtungen durch Verfahren des Schneidmessers geschnitten.

Dies hat den Vorteil, dass die beim Schneiden auftretenden Kräfte durch die Halteeinrichtungen besonders effektiv aufgenommen werden können.

Ferner hat die Schienentrennvorrichtung und das Verfahren den Vorteil, dass dadurch, dass die Schiene mit Hilfe der mindestens zwei Halteeinrichtung gehalten wird und dann mit einem Schneidmesser zwischen den beiden Halteeinrichtungen geschnitten wird, die Schiene beim Schneiden nicht bzw. nur wenig verformt bzw. gequetscht wird. Dies hat den Vorteil, dass die Schiene auch nach dem Schneiden befahrbar ist. Somit kann die Schienentrennvorrichtung an ein Schienenfahrzeug angekoppelt werden oder Teil eines Schienenfahrzeugs sein, wobei das Schienenfahrzeug weiterhin über die bereits geschnittenen Schienen fahren kann.

Die vorliegende Erfindung hat ferner den Vorteil, dass die Schienen vollautomatisch getrennt werden. Somit können die Schienen eines Gleises sehr schnell geschnitten werden. Die Schienen werden vorzugsweise nur teilweise mit dem Schneidmesser geschnitten. Vorzugsweise wird nur der Schienenkopf mit dem Schneidmesser geschnitten. Dies hat den Vorteil, dass die Schienen, dadurch, dass sie noch zum Teil miteinander verbunden sind, noch besser im bereits geschnittenen Zustand mit dem Schienenfahrzeug überfahren werden können.

Nach dem Trennen der Schienen können mit Hilfe eines Baggers o.ä. die Schienen aus dem Gleisbett herausgenommen werden. Die teilweise geschnittenen Schienen brechen bei dem Herausnehmen. Auf diese Weise können die Schienenstücke sehr schnell abtransportiert werden.

Die Halteeinrichtungen können auch Klemmeinrichtungen zum Klemmen der Schiene sein. Dies hat den Vorteil, dass sich die Schienen beim Schneiden in alle Richtungen fixiert sind und auf diese Weise ein besonders gerader und sauberer Schnitt möglich ist.

Das Schneidmesser kann in einer Richtung, die orthogonal zur Längsrichtung der Schiene verläuft, verfahrbar sein. Das Schneidmesser wird vorzugsweise in eine Richtung verfahren, die orthogonal zur Mittelebene der Schiene verläuft, wobei die Mittelebene der Schiene in Längsrichtung der Schiene verläuft und orthogonal zum Boden des Schienenfußes verläuft, der normalerweise horizontal auf den Erdboden aufliegt. Somit wird das Schneidmesser vorzugsweise horizontal verfahren.

Das Schneidmesser kann mit Hilfe einer Druckerzeugungseinrichtung verfahrbar sein. Die Druckerzeugungseinrichtung ist vorzugsweise hydraulisch angetrieben. Dies hat den Vorteil, dass ein sehr hoher Druck aufgebracht werden kann und das Schneidmesser mit einem sehr hohen Druck verfahrbar ist.

Die Haltezylinder der Halteeinrichtung können in einer Richtung verfahrbar sein, die orthogonal zur Längsrichtung der Schienen verläuft. Diese Richtung verläuft vorzugsweise horizontal.

Die Halteeinrichtungen können aus jeweils einem Haltezylinder bestehen, wobei der jeweilige Haltezylinder in der Arbeitsposition vor dem Schneiden auf der von dem Schneidmesser entgegengesetzten Seite der Schiene angeordnet ist. Auf diese Weise kann die Kraft die beim Schneiden der Schiene in der Schiene auftritt besonders gut von den Halteeinrichtungen aufgenommen werden.

Die Halteeinrichtungen können alternativ aus jeweils zwei Haltezylindern bestehen, wobei jeweils zwei Haltezylinder einer Halteeinrichtung in der Arbeitsposition auf entgegengesetzten Seiten der zu schneidenden Schiene angeordnet sind. Dies hat den Vorteil, dass die Schienen effektiv geklemmt werden können.

Bei diesem Ausführungsbeispiel werden die jeweiligen Haltezylinder der jeweiligen Halteeinrichtung in jeweils entgegengesetzte Richtungen verfahren, und zwar wird jeder der Haltezylinder der Halteeinrichtungen jeweils in Richtung der Schiene verfahren, so dass die Schiene einklemmbar ist.

Die Haltezylinder werden vorzugsweise orthogonal zu der durch die Schiene verlaufenden Mittelebene der Schiene verfahren.

Vorzugsweise ist eine Aufnahmeeinrichtung zum Anschließen an ein Schienenfahrzeug vorgesehen. Das Schienenfahrzeug kann vorzugsweise ein auf den Schienen fahrbarer Bagger sein.

Alternativ kann die Schienentrennvorrichtung ein Teil eines Schienenfahrzeuges sein.

Das Schneidmesser und die Halteeinrichtung können in Bezug zu der Aufnahmeeinrichtung verschwenkbar sein. Dies hat den Vorteil, dass das Schneidmesser leicht in einer Arbeitsposition positionierbar ist.

Ferner hat dies den Vorteil, dass die Schienentrennvorrichtung, wenn sie über die Aufnahmeeinrichtung mit einem auf den Schienen fahrbaren Bagger verbunden ist, nach dem Schneiden einer Schiene angehoben werden kann und um 180° verschwenkt und an einer anderen Schnittstelle der gleichen Schiene oder einer zweiten Schiene positioniert werden kann.

Bei dem Verfahren zum Trennen einer Schiene eines Gleises können nach dem Schneiden der Schiene die Halteeinrichtungen gelöst werden und die Schienentrennvorrichtung in Längsrichtung um eine festgelegte Länge verfahren werden. Danach können wieder die Schritte des Verfahrens zum Trennen einer Schiene wiederholt werden, nämlich Platzieren einer Trennvorrichtung an einer Schiene eines Gleises, derart, dass das Schneidmesser in Längsrichtung der Schiene zwischen den beiden Halteeinrichtungen angeordnet ist, Halten der Schiene durch die mindestens zwei Halteeinrichtungen und Schneiden der Schiene zwischen den beiden Klemmeinrichtungen durch Verfahren des Schneidmessers.

Die Schienen werden durch die Halteeinrichtung vorzugsweise dadurch gehalten, dass die Halteeinrichtung die Schienen einklemmt.

Ferner können bei dem Verfahren zum Trennen einer Schiene eines Gleises nach dem Schneiden der Schiene die Halteeinrichtungen gelöst werden, die Schienentrennvorrichtung angehoben werden und die Schienentrennvorrichtung um 180° verschwenkt werden und an der zweiten Schiene des Gleises platziert werden. Danach können die Schritte des Verfahrens zum Trennen einer Schiene eines Gleises wiederholt werden, nämlich Platzieren einer Schienentrennvorrichtung an einer Schiene eines Gleises, derart, dass die Schneidmesser in Längsrichtung der Schiene zwischen den beiden Halteeinrichtungen angeordnet ist, Halten der Schiene durch die mindestens zwei Halteeinrichtungen und Schneiden der Schiene zwischen den beiden Halteeinrichtungen durch Verfahren des Schneidmessers.

Alternativ können nach dem Schneiden der Schiene die Halteeinrichtungen gelöst werden, die Schienentrennvorrichtung angehoben werden und die Schienentrennvorrichtung in eine Richtung, die orthogonal zur Längsrichtung der Schiene verläuft, zur zweiten Schiene verfahren werden und an der zweiten Schiene des Gleises platziert werden. Nachfolgend können die Schritte des Verfahrens zum Trennen einer Schiene wiederholt werden, nämlich, Platzieren einer Schienentrennvorrichtung an der zweiten Schiene des Gleises, derart, dass das Schneidmesser in Längsrichtung der Schiene zwischen den beiden Halteeinrichtungen angeordnet ist, Halten der Schiene durch die mindestens zwei Halteeinrichtungen und Schneiden der Schiene zwischen den beiden Halteeinrichtungen durch Verfahren des Schneidmessers.

Im Folgenden wird unter Bezugnahme auf die Zeichnungen ein Ausführungsbeispiel der Erfindung näher erläutert.

Es zeigen schematisch:
- Fig. 1: eine perspektivische Ansicht einer Schienentrennvorrichtung,
- Fig. 2: eine Seitenansicht der Schienentrennvorrichtung aus Fig. 1,
- Fig. 3: eine Detailansicht der Schienentrennvorrichtung aus Fig. 2, und
- Fig. 4: eine Ansicht von unten auf die Schienentrennvorrichtung gemäß Fign. 1 bis 3.

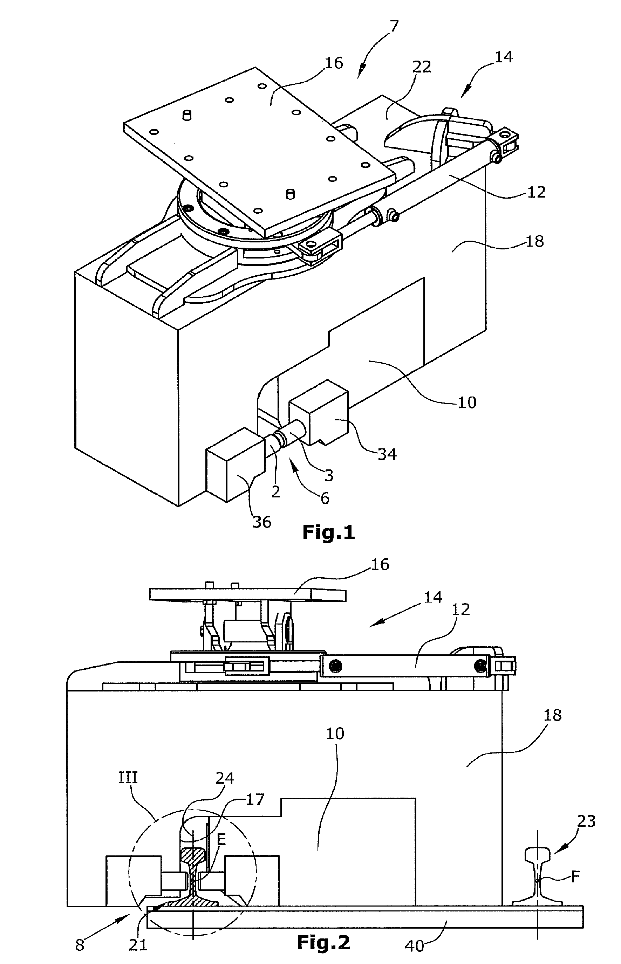

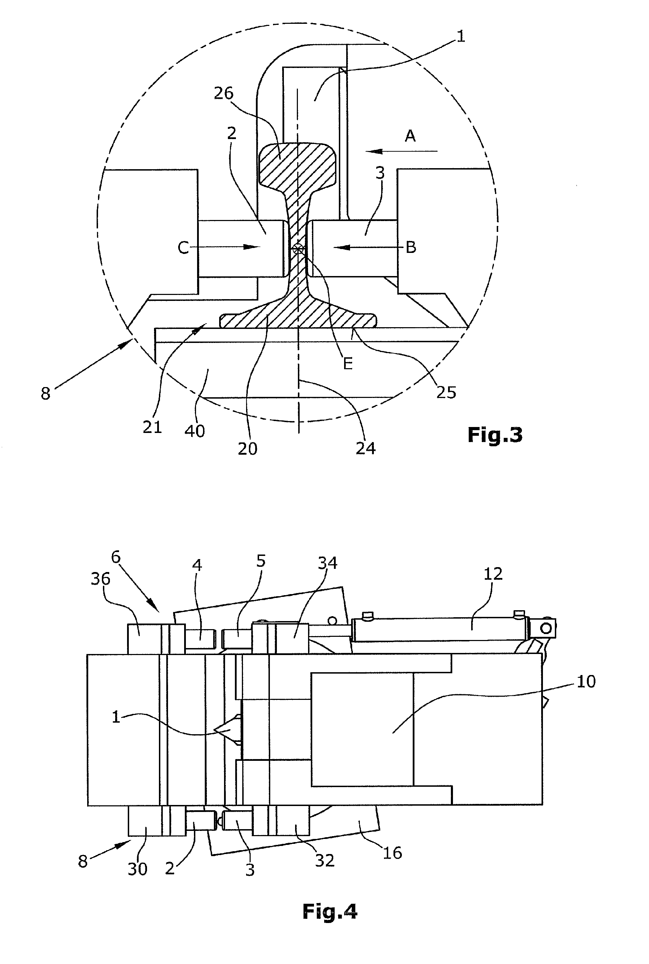

Fig.1 zeigt eine Schienentrennvorrichtung 7 zum Trennen von Schienen 21 eines Gleises. Die Schienentrennvorrichtung 7 weist ein Schneidmesser 1 auf, das in einer Arbeitsposition der Schienentrennvorrichtung 7 derart in Bezug zu einer Schiene 21 des Gleises platzierbar ist, dass die Schiene 21 zumindest teilweise mit dem Schneidmesser 1 durch Verfahren bzw. Zustellen des Schneidmessers 1 schneidbar ist. Die Arbeitsposition ist somit eine Position in der das Schneidmesser 1 derart in Bezug zu der zu schneidenden Schiene angeordnet ist, dass die Schiene 21 durch Verfahren des Schneidmessers 1 geschnitten werden kann. Ferner weist die Schienentrennvorrichtung 7 mindestens zwei Halteeinrichtungen 6,8 zum Halten der Schiene 21 auf. Die dargestellten Halteeinrichtungen sind Klemmeinrichtungen zum Klemmen der Schiene. Die Halteeinrichtungen 6,8 sind in der Arbeitsposition derart in Bezug zu dem Schneidmesser 1 angeordnet, dass das Schneidmesser 1 in Längsrichtung E der Schiene 21 zwischen den mindestens zwei Halteeinrichtungen 6,8 angeordnet ist. Dies ist z.B. in Fig. 4 zu sehen.

In Fig. 1 ist ferner eine Druckerzeugungseinrichtung 10 dargestellt, mit deren Hilfe das Schneidmesser 1 in einer Richtung orthogonal zur Längsrichtung der Schiene 21 verfahrbar ist. Die Druckerzeugungseinrichtung 10 wird vorzugsweise hydraulisch angetrieben. Ferner ist in Fig. 1 eine Halteeinrichtung 6 dargestellt. Diese Halteeinrichtung weist zwei Haltezylinder 2,3 auf. Diese Haltezylinder 2,3 können mit Hilfe jeweils einer Druckerzeugungseinrichtung 34,36 in einer Richtung orthogonal zur Längsrichtung der Schiene, z. B. in einer horizontalen Bewegungsrichtung, verfahren werden.

Die Schienentrennvorrichtung 7 weist einen Grundkörper 18 auf, an dem auf der Oberseite 22, d.h. an der dem Gleis abgewandten Seite, eine Aufnahmeeinrichtung 16 angeordnet ist. In dieser Aufnahmeeinrichtung 16 kann an ein Schienenfahrzeug angeschlossen werden. Dieses nicht dargestellte Schienenfahrzeug ist vorzugsweise ein auf den Schienen fahrbarer Bagger mit einem Schienenradsatz. Der Grundkörper 18 und somit das Schneidmesser 1 und die Halteeinrichtungen 6,8 können in Bezug zu der Aufnahmeeinrichtung 16 verschwenkt werden. Der Grundkörper 18 und somit das Schneidmesser 1 und die Halteeinrichtungen 6,8 können in Bezug zu der Aufnahmeeinrichtung 16 um mehr als 180° verschwenkt werden. Auf diese Weise kann die Schienentrennvorrichtung 7 und somit das Schneidmesser 1 besser in der Arbeitsposition platziert werden. Zudem kann die Schienentrennvorrichtung durch Verschwenken des Schneidmessers und der Halteeinrichtungen in Bezug zu der Aufnahmeeinrichtung 16 um 180° die Schienentrennvorrichtung an der zweiten Schiene 23 (Fig. 2) platziert werden. Auf diese Weise kann auch die zweite Schiene 23 geschnitten werden ohne dass zwei Schienentrennvorrichtungen notwendig wären.

In Fig. 2 ist die Schienentrennvorrichtung 7 in der Seitenansicht dargestellt. Das Schneidmesser 1 in Fig. 2 befindet sich in der Arbeitsposition. In dieser Arbeitsposition ist die Schienentrennvorrichtung 7 mit dem Schneidmesser 1 derart in Bezug zu der Schiene 21 platziert, dass die Schiene 21 zumindest teilweise mit dem Schneidmesser 1 durch Verfahren bzw. Zustellen des Schneidmessers 1 schneidbar ist. Somit ist das Schneidmesser 1 in der Arbeitsposition derart in Bezug zu der Schiene 21 des Gleises platziert, dass die Schiene 21 zumindest teilweise, d. h. zumindest der obere Teil oder Schienenkopf, mit dem Schneidmesser 1 schneidbar ist. In dieser Arbeitsposition sind die Halteeinrichtungen 6,8 derart in Bezug zu dem Schneidmesser 1 angeordnet, dass das Schneidmesser 1 in Längsrichtung E der Schiene 21 zwischen den mindestens zwei Halteeinrichtungen 6,8 angeordnet ist. In Fig. 2 sind die zwei Schienen 21,23 eines Gleises dargestellt. Ferner ist eine Schwelle 40 dieses Gleises dargestellt. Die Schienentrennvorrichtung 7 ist derart dimensioniert, dass das Schneidmesser 1 in der Arbeitsposition platzierbar ist. In dem in Fig. 2 dargestellten Fall ist der Grundkörper 18 derart dimensioniert, dass dieser in der Arbeitsposition nicht die zweite Schiene 23 oder die Schwelle berührt.

Beim Schneiden einer Schiene wird dann in einem ersten Schritt die Schienentrennvorrichtung 7 in der in Fig. 2 gezeigten Arbeitsposition platziert. In einem zweiten Schritt wird die Schiene 21 durch die beiden Halteeinrichtungen 6,8 gehalten. Im dargestellten Ausführungsbeispiel wird die Schiene durch die beiden Halteeinrichtungen sogar eingeklemmt. Das Halten bzw. Klemmen geschieht dadurch, dass die jeweiligen Haltezylinder 2,3,4,5 in eine Richtung, die orthogonal zur Längsrichtung der Schiene 21 und, vorzugsweise horizontal verläuft, verfahren werden. In Fig. 3, die ein Ausschnitt der Schienentrennvorrichtung aus Fig. 2 ist, ist eine Position dargestellt, in der die Schiene 21 durch die Haltezylinder 2,3,4 und 5 festgehalten bzw. eigeklemmt wird, um eine zur Schnittkraft des Schneidmessers 1 gleich hohe Gegenkraft zu erhalten.

In einem dritten Schritt wird, wie in Fig. 3 dargestellt, das Schneidmesser 1 in Richtung A verfahren bzw. zugestellt und die Schiene 21 zwischen den beiden Halteeinrichtung 6,8 geschnitten. Verfahren bzw. Zustellen des Schneidmessers in Richtung A bedeutet, dass das Schneidmesser 1 in Richtung A bewegt wird.

In dem in Fig. 2 und 3 dargestellten Fall, wird nur ein Teil der Schiene geschnitten. Der in den Fign. 2 und 3 dargestellten Fall werden die Haltezylinder 2 und 4 in Richtung C verfahren und die Haltezylinder 3 und 5 in Richtung B verfahren. Richtung C und B sind jeweils zueinander entgegengesetzte Richtungen. Die Richtungen C und B verlaufen orthogonal zu der Längsrichtung E der Schiene 21 und orthogonal zu der Mittelebene 24 der Schiene 21. Die Mittelebene 24 der Schiene 21 verläuft entlang der Längsrichtung E der Schiene 21 und orthogonal zu der Bodenfläche 25 des Fußes 20 der Schiene 21. In Fig. 3 ist die Schiene 21 im Querschnitt dargestellt. Die Längsrichtung E der Schiene 21 verläuft entlang der Länge der Schiene 21 und verläuft orthogonal zu der in Fig. 3 dargestellten Querschnittsfläche der Schiene 21. Die Haltezylinder 2 und 4 befinden sich in der Arbeitsposition auf der anderen Seite der Schiene 21 als die Haltezylinder 3 und 5. Die Haltezylinder 2,3,4 und 5 werden jeweils in Richtung der Schiene 21 verfahren und dabei wird die Schiene 21 gehalten bzw. eingeklemmt. Die Haltezylinder 2,3,4 und 5 können auch in jegliche andere Richtung verfahren werden, z.B. in einem anderen Winkel als 90° zu der Mittelebene 24 der Schiene 21. Es muss lediglich sichergestellt sein, dass die Schiene mit beiden Halteeinrichtungen 6,8 gehalten bzw. eingeklemmt wird. Die Haltezylinder 2,3,4 und 5 können die Schiene 21 auch im Kopf- oder Fußbereich halten bzw. einklemmen.

Das Schneidmesser 1 wird im dargestellten Beispiel zum Schneiden in einer Richtung A verfahren bzw. zugestellt. Die Richtung A verläuft orthogonal zu der Längsrichtung E der Schiene 21. Die in den Fign. 2 und 3 dargestellte Richtung A verläuft ebenfalls orthogonal zu der Mittelebene 24 der Schiene 21. Das Schneidmesser 1 könnte auch bezogen zu der Mittelebene 24 unter einem Winkel, der von 90° abweicht, verfahren werden. Auch das Schneidmesser kann in jegliche andere Richtung verfahren werden, es muss lediglich sichergestellt sein, dass die Schiene zumindest teilweise durch Verfahren bzw. Zustellen des Schneidmessers 1 schneidbar ist.

Nach dem Schneiden der Schiene 21 können die Halteeinrichtungen 6,8 gelöst werden und die Schienentrennvorrichtung 7 in Längsrichtung E oder in entgegengesetzter Richtung um eine festgelegte Länge verfahren werden. Danach werden wieder die Schritte des Verfahrens zum Trennen einer Schiene ausgeführt, nämlich, dass die Schienentrennvorrichtung 7 an der Schiene 21 derart platziert wird, dass die Schiene 21 zumindest teilweise mit dem Schneidmesser 1 durch Verfahren des Schneidmessers 1 schneidbar ist, wobei das Schneidmesser 1 in Längsrichtung E der Schiene 21 zwischen den beiden Halteeinrichtungen angeordnet ist. Im zweiten Schritt wird die Schiene 21 durch die zwei Halteeinrichtungen 6,8 geklemmt bzw. gehalten und im dritten Schritt wird die Schiene 21 zwischen den beiden Halteeinrichtungen 6,8 durch Verfahren bzw. Zustellen des Schneidmessers 1 geschnitten. Dieses Verfahren gemäß des Anspruchs 9 kann beliebig oft wiederholt werden. Auf diese Weise kann eine Schiene 21 eines Gleises sehr schnell in einzelne Stücke geschnitten werden.

Danach kann die Schienentrennvorrichtung 7 angehoben werden und zu der zweiten Schiene 23 des Gleises entweder verfahren werden oder der Grundkörper 18 wird zusammen mit dem Schneidmesser 1 und den Halteeinrichtungen 6,8 um 180° in Bezug zu der Aufnahmeeinrichtung 16 verschwenkt. Danach wird die Schienentrennvorrichtung 7 in Bezug zu der zweiten Schiene 23 platziert und der Schneidvorgang wird wie oben beschrieben auch an der zweiten Schiene ausgeführt.

Nach Schneiden der beiden Schienen 21,23 kann ein Bagger o.ä. mit einer Aufsammelvorrichtung die Schienen bzw. die Schienenabschnitte leicht aufsammeln. Wenn die Schienen nur teilweise geschnitten werden, besteht der Vorteil, dass die Schienen beim Anheben an den Schnittstellen ganz brechen.

In Fig. 4 ist die Schienentrennvorrichtung 7 von unten dargestellt. Dort lässt sich gut erkennen, dass das Schneidmesser 1 zwischen den beiden Halteeinrichtungen 6,8 angeordnet ist und somit die Schiene 21,23 zwischen den beiden Halteeinrichtungen 6,8 schneidbar ist.

Dadurch, dass das Schneidmesser 1 in der Arbeitsposition zwischen den beiden Halteeinrichtungen 6,8 angeordnet ist und von den beiden Halteeinrichtungen 6,8 gehalten bzw. geklemmt wird, kann die Schiene 21, ohne bzw. mit nur wenig Verformung mit dem Schneidmesser 1 geschnitten werden. Das Schneidmesser 1 wird mit hohem Druck verfahren. Dies hat ebenfalls den Vorteil, dass es aufgrund der Halteeinrichtung zu keiner bzw. nur zu wenig Verformung der Schiene 21 beim Schneiden kommt. Dadurch dass die Schienen sich nur wenig bzw. nicht verformen, haben die geschnittenen Schienenteile keinen Versatz zueinander. Dies hat den Vorteil, dass die Schienenfahrzeuge, selbst nachdem die Schienen geschnitten worden sind, noch über die Schienen 21,23 fahren können.

Die Halteeinrichtungen 6,8 können als Alternative auch nur einseitig, d.h. in der Arbeitsposition nur auf einer Seite der Schiene 21 jeweils einen Haltezylinder aufweisen. Auf der anderen Seite der Schiene 21 kann jeweils ein Anschlag vorgesehen sein.

Bei nur einem Haltezylinder pro Halteeinrichtung kann auch kein Anschlag auf der anderen Seite der Schiene 21 vorgesehen sein. In diesem Fall müssen die Haltezylinder bzw. die Halteeinrichtungen in der Arbeitsposition vor dem Schneiden, auf der dem Schneidmesser gegenüberliegenden Seite angeordnet sein. In diesem Fall wären nur die Haltezylinder 2 und 4 vorhanden. In diesem Fall wird die Schiene dann auch beim Schneiden gehalten.

Als weitere Alternative können die Haltezylinder 2,4 und 3,5, die jeweils in der Arbeitsposition auf der gleichen Seite der Schiene 21 angeordnet sind, miteinander verbunden sein. Sie können z. B. einstückig miteinander verbunden sein. In diesem Fall können dann die Haltezylinder 2 und 4 bzw. 3 und 5 nur jeweils gemeinsam verfahren werden.

Bei dem alternativen Ausführungsbeispiel bei dem nur die Haltezylinder 2 und 4 vorhanden sind, kann auch vorgesehen sein, dass die Haltezylinder, vorzugsweise einstückig, miteinander verbunden sind.

Ferner können das Schneidmesser 1 und die Halteeinrichtungen 6,8 zusammen mit den jeweiligen Haltezylindern 2,3,4 und 5 derart angeordnet sein, dass in der Arbeitsposition, wie sie in Fig. 2 dargestellt ist, der Schienenkopf 26 zusätzlich an der Wand 17 des Grundkörpers 18 anliegt. Dadurch wird die Schiene 21 zusätzlich zu den Halteeinrichtungen 6,8 beim Schneiden mit dem Schneidmesser 1 eingeklemmt.

## Patentansprüche

1. Schienentrennvorrichtung (7) zum Trennen von Schienen (21) eines Gleises,
**dadurch gekennzeichnet,**
- **dass** mindestens ein Schneidmesser (1) vorgesehen ist, das in einer Arbeitsposition derart in Bezug zu einer Schiene (21) des Gleises platzierbar ist, dass die Schiene (21) zumindest teilweise mit dem Schneidmesser (1) durch Verfahren des Schneidmessers (1) schneidbar ist,
- **dass** mindestens zwei Halteeinrichtungen (6,8) zum Halten der Schiene (21) beim Schneiden mit dem Schneidmesser (1) vorgesehen sind, wobei die Halteeinrichtungen (6,8) in der Arbeitsposition derart in Bezug zu dem Schneidmesser (1) angeordnet sind, dass das Schneidmesser (1) in Längsrichtung (E) der Schiene zwischen den mindestens zwei Halteeinrichtungen (6,8) angeordnet ist.

2. Schienentrennvorrichtung nach Anspruch 1, **dadurch gekennzeichnet, dass** die mindestens zwei Halteeinrichtungen (6,8) Klemmeinrichtungen zum Klemmen der Schiene (21) sind.

3. Schienentrennvorrichtung nach Anspruch 1 oder 2, **dadurch gekennzeichnet, dass** das Schneidmesser (1) in einer Richtung, die orthogonal zur Längsrichtung (E) der Schiene (21) verläuft, verfahrbar ist.

4. Schienentrennvorrichtung nach einem der Ansprüche 1 bis 3, **dadurch gekennzeichnet, dass** das Schneidmesser (1) mit Hilfe einer Druckerzeugungseinrichtung (10) verfahrbar ist.

5. Schienentrennvorrichtung nach Anspruch 4, **dadurch gekennzeichnet, dass** die Druckerzeugungseinrichtung (10) hydraulisch angetrieben ist.

6. Schienentrennvorrichtung nach einem der Ansprüche 1 bis 5, **dadurch gekennzeichnet, dass** die Halteeinrichtungen aus jeweils einem Haltezylinder bestehen, wobei der jeweilige Haltezylinder in der Arbeitsposition vor dem Schneiden auf der von dem Schneidmesser (1) entgegengesetzten Seite der Schiene (21) angeordnet ist.

7. Schienentrennvorrichtung nach einem der Ansprüche 2 bis 5, **dadurch gekennzeichnet, dass** die Halteeinrichtungen (6,8) aus jeweils zwei Haltezylindern (2,3,4,5) bestehen, wobei die jeweils zwei Haltezylinder (2,3,4,5) einer Halteeinrichtung (6,8) in der Arbeitsposition auf entgegengesetzten Seiten der zu schneidenden Schiene (21) angeordnet sind.

8. Schienentrennvorrichtung (7) nach einem der Ansprüche 1 bis 7, **dadurch gekennzeichnet, dass** die Haltezylinder (2,3,4,5) der Halteeinrichtungen (6,8) in einer Richtung verfahrbar sind, die orthogonal zur Längsrichtung (E) der Schienen (21) verläuft.

9. Schienentrennvorrichtung (7) nach einem der Ansprüche 1 bis 8, **dadurch gekennzeichnet, dass** eine Aufnahmeeinrichtung (16) zum Anschließen an ein Schienenfahrzeug, vorzugsweise an ein auf den Schienen (21) fahrbaren Bagger, vorgesehen ist.

10. Schienentrennvorrichtung (7) nach einem der Ansprüche 1 bis 9, **dadurch gekennzeichnet, dass** das Schneidmesser (1) und die Halteeinrichtungen (6,8) in Bezug zu der Aufnahmeeinrichtung (16) verschwenkbar sind.

11. Verfahren zum Trennen einer Schiene (21) eines Gleises durch
- Platzieren einer Schienentrennvorrichtung (7), die mindestens ein Schneidmesser (1) und mindestens zwei Halteeinrichtungen (6,8) aufweist, an einer Schiene eines Gleises, derart dass das Schneidmesser (1) in Längsrichtung (E) der Schiene (21) zwischen den beiden Halteeinrichtungen (6,8) angeordnet ist,
- Halten der Schiene (21) durch die mindestens zwei Halteeinrichtungen (6,8), und
- Schneiden der Schiene (21) zwischen den beiden Halteeinrichtungen (6,8) durch Verfahren des Schneidmessers (1).

12. Verfahren nach Anspruch 11, **dadurch gekennzeichnet, dass** nur der Schienenkopf (26) mit dem Schneidmesser (1) geschnitten wird.

13. Verfahren nach Anspruch 11 oder 12, **dadurch gekennzeichnet, dass** nach dem Schneiden der Schiene (21)
- die Halteeinrichtungen (6,8) gelöst werden und
- die Schienentrennvorrichtung (7) in Längsrichtung (E) um eine festgelegte Länge verfahren wird und nachfolgend die Schritte gemäß dem Verfahren nach Anspruch 9 wiederholt werden.

14. Verfahren nach einem der Ansprüche 11 bis 13, **dadurch gekennzeichnet, dass** nach dem Schneiden der Schiene (21)
- die Halteeinrichtungen (6,8) gelöst werden,
- die Schienentrennvorrichtung (7) angehoben wird und
- die Schienentrennvorrichtung (7) um 180° verschwenkt wird und an der zweiten Schiene des Gleises platziert wird und nachfolgend die Schritte des Verfahrens gemäß Anspruch 9 an der zweiten Schiene ausgeführt werden.

15. Verfahren nach einem der Ansprüche 11 bis 13, **dadurch gekennzeichnet, dass** nach dem Schneiden der Schiene (21)
- die Halteeinrichtungen (6,8) gelöst werden,
- die Schienentrennvorrichtung (7) angehoben wird und
- die Schienentrennvorrichtung (7) in einer Richtung, die orthogonal zur Längsrichtung der Schiene (21) verläuft, zur zweiten Schiene verfahren wird und an der zweiten Schiene des Gleises platziert wird und nachfolgend die Schritte des Verfahrens gemäß Anspruch 9 an der zweiten Schiene ausgeführt werden.
